# EUROPÄISCHE PATENTSCHRIFT

(11) **EP 0 619 447 B1**
(45) Veröffentlichungstag und Bekanntmachung des Hinweises auf die Patenterteilung: **23.12.1998**
(21) Anmeldenummer: 94102304.6
(22) Anmeldetag: 16.02.1994
(51) Int. Cl.: F16J 15/08

(54) **Metallische Flachdichtung**
Flat metallic gasket
Joint plat métallique

(30) Priorität: 26.02.1993 DE 4305974
(43) Veröffentlichungstag der Anmeldung: 12.10.1994
(73) Patentinhaber: ELRING KLINGER GMBH, 72581 Dettingen (DE)
(72) Erfinder: Böhm, Klaus, D-65510 Idstein-Walsdorf (DE); Path, Siegbert, D-65549 Limburg (DE)
(74) Vertreter: Sparing Röhl Henseler Patentanwälte

(56) Entgegenhaltungen:
- EP-A- 0 306 766
- EP-A- 0 465 268
- EP-A- 0 494 489

## Beschreibung

Die Erfindung betrifft eine metallische Flachdichtung, insbesondere Zylinderkopfdichtung, nach dem Oberbegriff des Anspruchs 1.

Eine derartige laminierte, metallische, eine Zylinderkopfdichtung bildende Flachdichtung ist aus der EP-B-0 306 766 bekannt, bei der ein Zwischenelement zwischen zwei elastischen Metallplatten vorgesehen ist, die im Bereich von Durchgangsöffnungen zur Brennraumabdichtung jeweils mit einer Sicke, die im Abstand zum Randbereich der Metallplatte benachbart zur Durchcangsöffnung umlaufend angeordnet ist, versehen sind, wobei die Sicken der beiden Metallplatten symmetrisch zum Zwischenelement angeordnet sind. Das Zwischenelement wird von einem Trägerblech gebildet, das in dem Randbereich benachbart zur Durchgangsöffnung gestuft und mittels eines im Randbereich umgebördelten Überhöhungsblechs benachbart zu den symmetrisch angeordneten Sicken umlaufend überhöht ist. Hierdurch kann trotz hoher mechanischer und thermischer Beanspruchungen eine sehr hohe Abdichtwirkung infolge örtlich hoher Pressung erzielt werden, wobei durch die geometrische Überhöhung zugleich andere Bauteile der Dichtung entlastet oder geschützt oder in ihrer Lebensdauer wesentlich verlängert werden. Allerdings ist es bei einer derartigen Konstruktion aus Platzgründen nicht möglich, bei relativ kleinen Stegbreiten zwischen den Durchgangsöffnungen, und zwar insbesondere solchen < 6 mm, die Überhöhungen und Sicken in dieser Form anzubringen, so daß für derartige geringe Stegbreiten keine genügende Abdichtung auf diese Weise erzielbar ist.

Außerdem ist aus EP-A-0 465 268 eine metallische Zylinderkopfdichtung bekannt, die zwei äußere elastische Metallplatten umfaßt, die mit nach außen gerichteten, sich um Durchgangsöffnungen erstreckenden, im Bereich zwischen zwei Durchgangsöffnungen gegeneinander versetzten Sicken versehen ist, wobei zwischen den beiden Metallplatten eine Überhöhungsblechplatte angeordnet ist, die im Bereich zwischen zwei Durchgangsöffnungen nach außen auf den zur jeweiligen Sicke benachbarten Randbereich umgebogen ist. Bei einer derartigen Konstrukticn läßt sich keine zur Anpassung an eine vorgegebene Dichtspalthöhe dienende Trägerplatte zwischenfügen und die nach außen gerichteten Sicken können sich in die benachbarten Flächen von Zylinderkopf und Zylinderblock einarbeiten.

Aufgabe der Erfindung ist es, eine metallische Flachdichtung nach dem Oberbegriff des Anspruchs 1 zu schaffen, mit der auch für relativ kleine Stegbreiten die gewünschte Abdichtung erzielbar ist.

Diese Aufgabe wird dadurch gelöst, daß sich die die Überhöhungen bildenden umgebogenen Randbereiche der Überhöhungsblechplatte(n) zwischen den Randbereichen von jeweils zwei benachbarten Durchgangsöffnungen auf gegenüberliegenden Seiten der Zwischenschicht befinden, wobei sich die Sicken der elastischen Metallblechplatten auf den Randbereichen an der den Überhöhungen gegenüberliegenden Seite der Zwischenschicht abstützen.

Weitere Ausgestaltungen der Erfindung sind der nachfolgenden Beschreibung und den Unteransprüchen zu entnehmen.

Die Erfindung wird nachstehend anhand der in den beigefügten Abbildungen stark vergrößert dargestellten Ausführungsbeispiele näher erläutert.

Fig. 1 zeigt ausschnittweise im Schnitt eine Ausführungsform einer metallischen Flacndichtung.

Fig. 2 bis 6 zeigen ausschnittweise im Schnitt weitere Ausführungsformen einer metallischen Flachdichtung, wobei die erfindungsgemäßen Überhöhungen in sämtlichen Ausführungsformen vorhanden sind aber in den Fig. 3-6 nicht erkennbar gezeichnet sind.

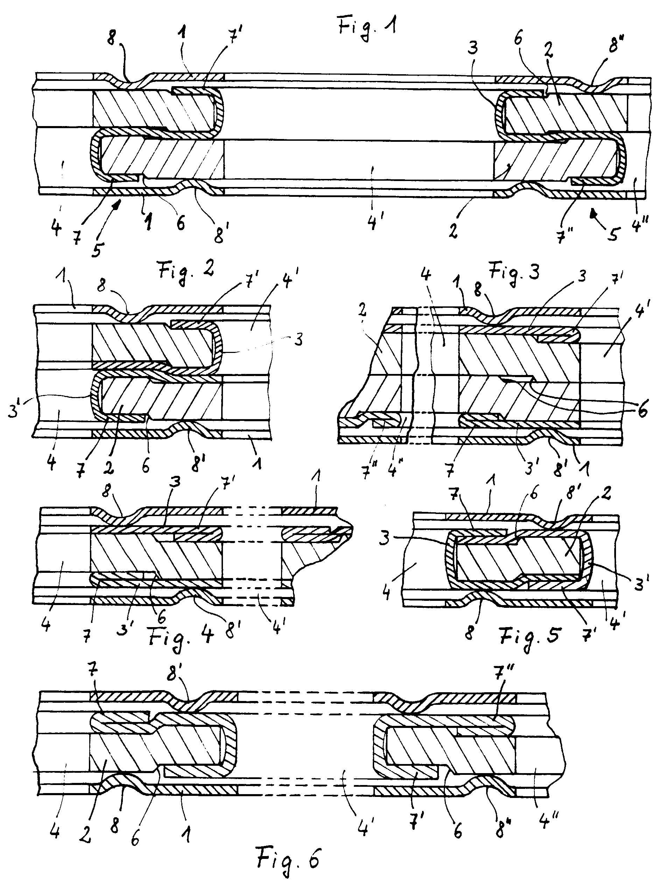

Die in Fig. 1 dargestellte Ausführungsform einer laminierten metallischen Flachdichtung, die insbesondere als Zylinderkopfdichtung verwendbar ist, umfaßt zwei äußere, elastische Metallblechplatten 1 beispielsweise aus Federstahl (einer Stärke von beispielsweise 0,20 mm) und eine zwischen den beiden äußeren Metallblechplatten 1 angeordnete Zwischenschicht. Die Zwischenschicht wird bei diesem Ausführungsbeispiel aus zwei Trägerblechplatten 2 (jeweils von einer Stärke von beispielsweise 0,45 mm) und einer Überhöhungsblechplatte 3 (einer Stärke von beispielsweise 0,10 mm) gebildet. Hierbei ist die Überhöhungsblechplatte 3 zwischen den beiden Trägerblechplatten 2 angeordnet.

Die Flachdichtung besitzt mehrere, im allgemeinen kreisförmige Durchgangsöffnungen 4, 4', 4" (zu den Brennräumen einer Brennkraftmaschine), die durch Stege 5 voneinander getrennt sind, die an ihrer schmalsten Stelle beispielsweise kleiner als 6 mm sein können.

Jede Trägerblechplatte 2 besitzt eine schmale, im Randbereich um die jeweilige Durchgangsöffnung 4, 4', 4" umlaufende Stufung 6, so daß bei übereinander angeordneten Trägerblechplatten 2 die jeweiligen Stufungen 6 etwas versetzt ineinandergreifen.

Die überhöhungsblechplatte 3, die zwischen den beiden Trägerblechplatten 2 angeordnet ist, ist im wesentlichen S-förmig derart umgebördelt, daß ein Abschnitt der Überhöhungsblechplatte 3 den umlaufenden Randbereich einer Trägerblechplatte 2 im Bereich einer Durchgangsöffnung 4 und ein weiterer Abschnitt der Überhöhungsblechplatte 3 den umlaufenden Randbereich der anderen Trägerblechplatte 2 im Bereich der benachbarten Durchgangsöffnung 4', 4" überhöhend umfaßt. Hierbei sind die umlaufenden Ränder der Trägerblechplatten 2 an den Durchgangsöffnungen 4, 4', 4" derart gegeneinander versetzt, daß die nicht von der umgebördelten Überhöhungsblechplatte 3 abgedeckten Ränder mit den abgedeckten fluchten.

Auf diese Weise wird eine um eine Durchgangsöffnung 4 umlaufende Überhöhung 7 an einer Seite der Zwischenschicht und eine um eine benachbarte Durchgangsöffnung 4', 4" umlaufende Überhöhung 7', 7" auf der anderen Seite der Zwischenschicht ausgebildet.

In den äußeren, elastischen Metallblechplatten 1 sind sich in Richtung auf die Zwischenschicht erstreckende, um die Durchgangsöffnungen 4, 4', 4" mit sehr geringem Abstand hierzu umlaufende Sicken 8, 8', 8" angeordnet, die sich auf den nicht von dem Überhöhungsblech 3 umbördelten, die jeweilige Durchgangsöffnung 4, 4', 4" umgebenden Randbereichen der Trägerblechplatten 2 abstützen, so daß die Sicken 8, 8', 8" versetzt zueinander angeordnet sind und sich im wesentlichen unmittelbar am Rand der entsprechenden Durchgangsöffnung 4, 4' bzw. 4" befinden.

Bei der in Fig. 2 dargestellten Ausführungsform sind zwei benachbart angeordnete Überhöhungsblechplatten 3, 3' vorgesehen, die beide zwischen den Trägerblechplatten 2 angeordnet sind, wobei die eine überhöhungsblechplatte 3 im Randbereich um die Durchgangsöffnung 4 um eine nach innen gerichtete Stufung 6 einer Trägerblechplatte 2 herum nach außen umgebördelt ist, während die andere Überhöhungsblechplatte 3' im Randbereich um die benachbarte Durchgangsöffnung 4' ebenfalls um eine nach innen gerichtete Stufung 6 der anderen Trägerblechplatte 2 herum nach außen umgebördelt ist. Beide Überhöhungsblechplatten 3, 3' erstrekken sich an ihrem nicht umgebördelten Ende bis zum Rand der jeweiligen Durchgangsöffnung 4 bzw. 4'.

Bei der in Fig. 3 dargestellten Ausführungsform sind die beiden, Stufungen 6 aufweisenden Trägerblechplatten 2 unmittelbar benachbart zueinander und die beiden Überhöhungsblechplatten 3, 3' auf den Außenseiten der beiden Trägerblechplatten 2 angeordnet. Hierbei sind die Überhöhungsblechplatten 3, 3' in den Randbereichen um die entsprechenden Durchgangsöffnungen 4, 4', 4" herum - anstatt umgebördelt - nach innen oder nach außen umgefalzt, wobei die umgefalzten, die Überhöhungen 7, 7', 7" bildenden Randbereiche im Bereich der Stufungen 6 angeordnet sind. Der jeweils zu einem umgefalzten Randbereich benachbarte, eine benachbarte Durchgangsöffnung 4, 4', 4" umgebende Rand ist nicht gefalzt und bündig mit dem Rand dieser Durchgangsöffnung 4, 4', 4", wobei sich die entsprechenden Sicken 8, 8', 8" der äußeren Metallblechplatten 1 auf den Überhöhungsblechplatten 3, 3' benachbart zu deren ungefalztem Rand im ungefalzten Bereich abstützen.

Wie aus Fig. 4 ersichtlich ist, kann anstelle von zwei Trägerblechplatten 2 gemäß Fig. 3 auch nur eine Trägerblechplatte 2 verwendet werden, die im Stegbereich zwischen zwei Durchgangsöffnungen 4, 4' eine Stufung 6 aufweist, die dann einerseits um die Durchgangsöffnung 4 und andererseits um die Durchgangsöffnung 4' verläuft.

Bei der in Fig. 5 dargestellten Ausführungsform wird eine wie bei der Ausführungsform von Fig. 4 gestufte Trägerblechplatte 2 zusammen mit zwei Überhöhungsblechplatten 3, 3' verwendet, die jeweils bündig mit dem Rand der einen Durchgangsöffnung 4 bzw. 4' auf der Trägerblechplatte 2 angeordnet um den anderen Rand herum auf die darunter befindliche Überhöhungsblechplatte 3' bzw. 3 gebördelt sind. Die so gebildeten Überhöhungen 7, 7' liegen nur einlagig von den Überhöhungsblechplatten 3 bzw. 3' abgedeckten Bereichen der Trägerblechplatte 2, auf denen sich die Sicken 8, 8' abstützen, gegenüber.

Bei der in Fig. 6 dargestellten Ausführungsform wird ebenfalls eine Trägerblechplatte 2 wie in Fig. 4 verwendet, wobei eine Überhöhungsblechplatte 3 vorgesehen ist, die im Randbereich einer Durchgangsöffnung 4' um den Rand der Trägerblechplatte 2 herum umgebördelt ist, während sie im Randbreich der benachbarten Durchgangsöffnung 4",4 umlaufend nach innen oder außen umgefalzt ist, während sich die Sicken 8, 8' einerseits auf der Trägerblechplatte 2 an der dem umgefalzten Bereich der Überhöhungsblechplatte 3 abgewandten Seite sowie auf der Überhöhungsblechplatte 3 an der der Umbördelung abgewandten Seite abstützen.

Bei den Ausführungsformen der Fig. 4 bis 6 können auch zwei (oder mehr) Trägerblechplatten 2 wie bei Fig. 3 angeordnet vorgesehen sein, während bei der Ausführungsform von Fig. 2 zusätzlich eine oder mehrere Trägerblechplatten 2 zwischen den Überhöhungsblechplatten 3, 3' angeordnet sein können. Die umgebördelten Randbereiche der Überhöhungsblechplatten 3, 3' können zusätzlich umgefalzt sein.

Die Stege 5 können auch zwischen dem Außenrand der Flachdichtung und einer benachbarten Durchgangsöffnung 4, 4' bzw. 4" sehr schmal sein und dort eine entsprechende Anordnung erfordern.

Die Stufungen 6 der Trägerblechplatten 2 können auf eine beliebige Höhe zwischen Null und Überhöhungsblechdicke eingestellt werden, um auf die Pressungserhöhung und Schutzwirkung durch die Überhöhungen ebenso wie - durch umlaufend um die Durchgangsöffnungen 4, 4' bzw. 4" variierend angebrachte Stufungshöhe - auf die Verteilung der eingebrachten Kräfte und die Verformung der Bauteile gezielt Einfluß zu nehmen. Dadurch können gebördelte und/oder gefalzte Überhöhungen 7, 7', 7" bei sehr geringen Stegbreiten, insbesondere kleiner 6 mm, dargestellt werden, die ohne Kröpfung, aber dafür durch Verwendung sehr dünner Materialien fertigungstechnisch und/oder durch Materialeigenschaften begrenzt, nicht erzielbar sind.

Die Trägerblechplatte(n) 2 und eventuell auch die Blechplatten 1 und 3 können gegebenenfalls mit einem teil- oder ganzflächigen Überzug aus weicherem Material, etwa weicherem Metall oder Elastomer, als das der jeweiligen Blechplatte 1, 2, 3 ein- oder beidseitig versehen sein.

## Patentansprüche

1. Metallische Flachdichtung, insbesondere Zylinderkopfdichtung, umfassend mehrere, übereinander angeordnete Metallblechplatten (1, 2, 3) mit umlaufenden, einen Außenrand und mindestens zwei benachbarten Durchgangsöffnungen (4, 4', 4") bildenden Randbereichen, wobei eine Zwischenschicht mit mindestens einer, zwei durch die Blechdicke voneinander getrennte Seiten aufweisenden Trägerblechplatte (2) vorgesehen ist, die an ihren Randbereichen durch mindestens eine an den Randbereichen umgebogene Überhöhungsblechplatte (3) mit einer Überhöhung (7, 7', 7") versehen ist, wobei sich die mindestens eine berhöhungsblechplatte (3) von einem Randbereich zu einem anderen Randbereich erstreckt, und die Zwischenschicht zwischen äußeren, elastischen Metallblechplatten (1) angeordnet ist, die im Bereich der Durchgangsöffnung(en) (en) (4, 4', 4") mit einer oder mehreren eine jeweilige Durchgangsöffnung (4, 4',4") umgebenden Sicken (8, 8', 8") versehen sind, dadurch **gekennzeichnet**, daß sich die die Überhöhungen (7, 7', 7") bildenden umgebogenen Randbereiche der Überhöhungsblechplatte(n) (3) zwischen den Randbereichen von jeweils zwei benachbarten Durchgangsöffnungen (4, 4', 4") auf gegenüberliegenden Seiten der Zwischenschicht befinden, wobei sich die Sicken (8, 8', 8") der elastischen Metallblechplatten (1) auf den Randbereichen an der den Überhöhungen (7, 7', 7") gegenüberliegenden Seite der Zwischenschicht abstützen.

2. Flachdichtung nach Anspruch 1, dadurch gekennzeichnet, daß die überhöhungsblechplatte (3) zwischen mindestens zwei Trägerblechplatten (2) angeordnet und an den Randbereichen von einem Randbereich zum anderen wechselnd zur einen und zur anderen Seite nach außen umgebördelt ist.

3. Flachdichtung nach Anspruch 2, dadurch gekennzeichnet, daß bei zwei Überhöhungsblechplatten (3, 3') beide an einem Randbereich zur einen Seite nach außen umgebördelt und an einem hierzu benachbarten Randbereich nicht umgebördelt sind, so daß sich an jedem Randbereich ein gebördelter und ein ungebördelter Randabschnitt der Überhöhungsblechplatten (3, 3') befindet.

4. Flachdichtung nach Anspruch 2 oder 3, dadurch gekennzeichnet, daß sich die Sicken (8, 8', 8") der elastischen Metallblechplatten (1) auf den den umgebördelten Randabschnitten der Überhöhungsblechplatte(n) (3, 3') gegenüberliegenden Seiten der Trägerblechplatten (2) abstützen.

5. Flachdichtung nach Anspruch 1, dadurch gekennzeichnet, daß bei zwei Überhöhungsblechplatten (3, 3') diese auf beiden Seiten der Trägerblechplatte (2) und gegebenenfalls mindestens einer weiteren Trägerblechplatte (2) angeordnet an einem Randbereich gefalzt und an einem hierzu benachbarten Randbereich ungefalzt sind, so daß sich an jedem Randbereich ein gefalzter und ein ungefalzter Randabschnitt der Überhöhungsblechplatten (3, 3') befindet.

6. Flachdichtung nach Anspruch 5, dadurch gekennzeichnet, daß sich die Überhöhungsblechplatten (3, 3') in den Randbereichen der Durchgangsöffnungen (4, 4', 4") mit den gefalzten Randabschnitten bis zum jeweiligen Rand der Durchgangsöffnungen (4, 4', 4") erstrecken.

7. Flachdichtung nach Anspruch 1, dadurch gekennzeichnet, daß bei zwei Überhöhungsblechplatten (3, 3') diese auf beiden Seiten der Trägerblechplatte(n) (2) von einem Randbereich zum anderen abwechselnd zur einen und zur anderen Seite der Trägerblechplatte(n) (2) umgebördelt sind.

8. Flachdichtung nach Anspruch 1, dadurch gekennzeichnet, daß die Überhöhungsblechplatte (3) im Randbereich einer Durchgangsöffnung (4) auf eine Seite der Trägerblechplatte(n) (2) umgebördelt und im Randbereich einer benachbarten Durchgangsöffnung (4') auf der anderen Seite der Trägerblechplatte(n) (2) umgefalzt ist.

9. Flachdichtung nach einem der Ansprüche 1 bis 8, dadurch gekennzeichnet, daß die Trägerblechplatte(n) (2) zwischen zwei benachbarten Randbereichen eine Stufung (6) aufweist (aufweisen).

10. Flachdichtung nach Anspruch 9, dadurch gekennzeichnet, daß die beiden Trägerblechplatten (2) ineinander passende Stufungen (6) aufweisen.

11. Flachdichtung nach einem der Ansprüche 1 bis 10, dadurch gekennzeichnet, daß die umgebördelten Randbereiche des oder der Überhöhungsbleche (3, 3') zusätzlich umgefalzt sind.

12. Flachdichtung nach einem der Ansprüche 1 bis 11, dadurch gekennzeichnet, daß die Trägerblechplatte (2) an ihren Randbereichen mit einer umlaufenden Stufung (6) versehen ist.

13. Flachdichtung nach einem der Ansprüche 1 bis 12, dadurch gekennzeichnet, daß zumindest die Trägerblechplatte (2) mit einem teil- oder ganzflächigen Überzug aus weicherem Material als das der Trägerblechplatte (2) ein- oder beidseitig versehen ist.

## Claims

1. Flat metallic gasket, in particular cylinder-head gasket, comprising a plurality of sheet metal plates (1, 2, 3) arranged one above the other with peripheral edge regions forming an outer edge and at least two adjacent openings (4, 4', 4"), one intermediate layer being provided with at least one sheet metal support plate (2) comprising two sides separated from each other by the thickness of the sheet metal, which plate (2) is provided on its edge regions with a superelevation (7, 7', 7'') by at least one sheet metal superelevation plate (3) bent over at the edge regions, in which case the at least one sheet metal superelevation plate (3) extends from one edge region to another edge region and the intermediate layer is located between outer, resilient sheet metal plates (1), which in the region of the opening(s) (4, 4', 4") are provided with one or more corrugations (8, 8', 8") surrounding a respective opening (4, 4', 4"), characterised in that the bent-over edge regions of the sheet metal superelevation plate(s) (3) forming the superelevations (7, 7', 7") are located between the edge regions of respectively two adjacent openings (4, 4', 4") on opposite sides of the intermediate layer, in which case the corrugations (8, 8', 8") of the resilient sheet metal plates (1) are supported on the edge regions on the side of the intermediate layer lying opposite the superelevations (7, 7', 7").

2. Flat gasket according to Claim 1, characterised in that the sheet metal superelevation plate (3) is located between at least two sheet metal support plates (2) and at the edge regions is beaded-over outwards from one edge region to the other alternately towards one and the other side.

3. Flat gasket according to Claim 1, characterised in that with two sheet metal superelevation plates (3, 3'), both are beaded-over outwards at one edge region towards one side and at an edge region adjacent thereto are not beaded-over, so that located at each edge region is a beaded-over and a non beaded-over edge section of the sheet metal superelevation plates (3,

4. Flat gasket according to Claim 2 or 3, characterised in that the corrugations (8, 8', 8") of the elastic sheet metal plates (1) are supported on the sides of the sheet metal support plates (2) lying opposite the beaded-over edge sections of the sheet metal superelevation plate(s) (3, 3').

5. Flat gasket according to Claim 1, characterised in that with two sheet metal superelevation plates (3, 3'), the latter, located on both sides of the sheet metal support plate (2) and possibly at least one further sheet metal support plate (2), are folded on one edge region and unfolded on an edge region adjacent thereto, so that located on each edge region is a folded and an unfolded edge section of the sheet metal superelevation plates (3, 3').

6. Flat gasket according to Claim 5, characterised in that in the edge regions of the openings (4, 4', 4"), the sheet metal superelevation plates (3, 3') with the folded edge sections extend as far as the respective edge of the openings (4, 4', 4").

7. Flat gasket according to Claim 1, characterised in that with two sheet metal superelevation plates (3, 3'), the latter are beaded-over on both sides of the sheet metal support plate(s) (2) from one edge region to the other alternately towards one and the other side of the sheet metal support plate(s) (2).

8. Flat gasket according to Claim 1, characterised in that in the edge region of one opening (4), the sheet metal superelevation plate (3) is beaded-over on one side of the sheet metal support plate(s) (2) and in the edge region of one adjacent opening (4'), is folded-over on the other side of the sheet metal support plate(s) (2).

9. Flat gasket according to one of Claims 1 to 8, characterised in that the sheet metal support plate(s) (2) comprises (comprise) a step (6) between two adjacent edge regions.

10. Flat gasket according to Claim 9, characterised in that the two sheet metal support plates (2) comprise steps (6) fitting one in the other.

11. Flat gasket according to one of Claims 1 to 10, characterised in that the beaded-over edge regions of the sheet metal superelevation plate(s) (3, 3') are additionally folded over.

12. Flat gasket according to one of Claims 1 to 11, characterised in that the sheet metal support plate (2) is provided on its edge regions with a peripheral step (6).

13. Flat gasket according to one of Claims 1 to 12, characterised in that at least the sheet metal support plate (2) is provided on one or both sides over part of its surface or over its entire surface with a covering of softer material than that of the sheet metal support plate (2).

## Revendications

1. Joint d'étanchéité plat métallique, en particulier joint d'étanchéité pour culasse, comprenant plusieurs plaques en tôle métallique (1,2,3) disposées les unes au-dessus des autres, avec des zones de bordure de pourtour, constituant une bordure extérieure et au moins deux ouvertures de passage (4, 4', 4") voisines, une couche intermédiaire, avec au moins une plaque en tôle support (2) présentant deux faces séparées l'une de l'autre par l'épaisseur de la tôle, la plaque en tôle support étant pourvue sur ses zones de bordure, d'une surélévation (7, 7', 7"), réalisée à l'aide d'au moins une plaque de surélévation en tôle (3) repliée sur les zones de bordure, la plaque de surélévation en tôle (3) s'étendant d'une zone de bordure à une autre zone de bordure, et la couche intermédiaire étant disposée entre des plaques en tôle métallique extérieures (1) élastiques, qui sont dotées, dans la zone de la ou des ouvertures de passage (4, 4', 4"), d'une ou plusieurs gorges (8, 8', 8") entourant une ouverture de passage (4, 4', 4") respective, caractérisé en ce que les zones de bordure repliées, constituant les surélévations (7, 7', 7"), de la où des plaques de surélévation en tôle (3) se trouvent entre les zones de bordure de chaque paire d'ouvertures de passage (4, 4', 4") voisines, sur des faces opposées de la couche intermédiaire, les gorges (8, 8', 8") des plaques en tôle métallique élastique (1) prenant appui sur les zones de bordure, sur la face, opposée aux surélévations (7, 7', 7"), de la couche intermédiaire.

2. Joint d'étanchéité plat selon la revendication 1, caractérisé en ce que la plaque de surélévation en tôle (3) est disposée entre au moins deux plaques en tôle support (2) et est à bord rabattu vers l'extérieur, alternativement vers l'une et vers l'autre face, sur les zones de bordure, d'une zone de bordure à l'autre.

3. Joint d'étanchéité plat selon la revendication 2, caractérisé en ce que dans le cas de deux plaques de surélévation en tôle (3, 3') les deux sont à bord rabattu vers l'extérieur sur une zone de bordure, vers une face et, sur une zone de bordure voisine de celles-ci, ne sont pas à bord rabattu, de manière, qu'en chaque zone de bordure se trouve un tronçon de bordure, à bord rabattu, et un autre, qui n'est pas à bord rabattu, des plaques de surélévation en tôle (3, 3').

4. Joint d'étanchéité plat selon la revendication 2 ou 3, caractérisé en ce que les gorges (8, 8', 8") des plaques en tôle métallique élastique (1) prennent appui sur les faces, opposées aux tronçons de bordure à bord rabattu, de la ou des plaques de surélévation en tôle (3, 3'), des plaques en tôle support (2).

5. Joint d'étanchéité plat selon la revendication 1, caractérisé en ce que dans le cas de deux plaques de surélévation en tôle (3, 3'), celles-ci sont disposées sur les deux faces de la plaque en tôle support (2) et, le cas échéant, d'au moins une autre plaque en tôle support (2), pliée sur une zone de bordure et repliée sur une zone de bordure voisine de celles-ci, de manière qu'en chaque zone de bordure se trouve un tronçon de bordure plié et un tronçon de bordure non plié des plaques de tôle de surélévation (3, 3").

6. Joint d'étanchéité plat selon la revendication 5, caractérisé en ce que les plaques de surélévation en tôle (3, 3') s'étendent dans les zones de bordure des ouvertures de passage (4, 4', 4") ayant les tronçons de bordure pliés, jusqu'aux bords respectifs des ouvertures de passage (4, 4', 4").

7. Joint d'étanchéité plat selon la revendication 1, caractérisé en ce que dans le cas de deux plaques de surélévation en tôle (3, 3'), celles-ci sont à bord rabattu sur les deux faces de la ou des plaques en tôle support (2), d'une zone de bordure à l'autre, de façon alternée, vers l'une ou l'autre face de la ou des plaques en tôle support (2).

8. Joint d'étanchéité plat selon la revendication 1, caractérisé en ce que la plaque de surélévation en tôle (3) est à bord rabattu dans la zone de bordure d'une ouverture de passage (4) sur une face de la ou des plaques en tôle support (2) et est repliée dans la zone de bordure d'une ouverture de passage (4') voisine, sur l'autre face de la ou des plaques en tôle support (2).

9. Joint d'étanchéité plat selon l'une des revendications 1 à 8, caractérisé en ce que la ou les plaques en tôle support (2) présentent un décrochement (6) entre deux zones de bordure voisines.

10. Joint d'étanchéité plat selon la revendication 9, caractérisé en ce que les deux plaques en tôle support (2) présentent des décrochements (6) qui s'ajustent les uns les autres.

11. Joint d'étanchéité plat selon l'une des revendications 1 à 10, caractérisé en ce que les zones de bordure à bord rabattu de la ou des tôles de surélévation (3, 3') sont en plus repliées.

12. Joint d'étanchéité plat selon l'une des revendications 1 à 11, caractérisé en ce que la plaque en tôle support (2) est dotée, sur ses zones de bordure, d'un décrochement (6) périphérique.

13. Joint d'étanchéité plat selon l'une des revendications 1 à 12, caractérisé en ce qu'au moins la plaque en tôle support (2) est pourvue, sur une ou deux faces, d'un revêtement constituant tout ou partie de sa surface, réalisé en un matériau plus mou que celui de la plaque en tôle support (2).
